# EUROPÄISCHE PATENTSCHRIFT

(11) **EP 1 774 434 B1**
(45) Veröffentlichungstag und Bekanntmachung des Hinweises auf die Patenterteilung: **07.09.2011**
(21) Anmeldenummer: 05761532.0
(22) Anmeldetag: 07.07.2005
(51) Int. Cl.: G06F 9/38

(54) **ARCHITEKTUR EINES NETZWERKPROZESSORS**
ARCHITECTURE OF A NETWORK PROCESSOR
ARCHITECTURE D'UN PROCESSEUR DE RÉSEAU

(30) Priorität: 23.07.2004 DE 102004035843
(43) Veröffentlichungstag der Anmeldung: 18.04.2007
(73) Patentinhaber: Infineon Technologies AG, 85579 Neubiberg (DE)
(72) Erfinder: SAUER, Christian, 85521 Ottobrunn (DE)
(74) Vertreter: Viering, Jentschura & Partner
(86) Internationale Anmeldenummer: PCT/DE2005/001203
(87) Internationale Veröffentlichungsnummer: WO 2006/010353

(56) Entgegenhaltungen:
- US-A1- 2003 103 490
- US-B1- 6 606 704
- US-B1- 6 772 218

## Beschreibung

Die Erfindung betrifft einen Netzwerkprozessor.

Mit dem Wachstum des Internets und dem damit verbundenen Wachstum der zu übertragenen Datenmenge gewinnt es zunehmend an Bedeutung, Hardware zu entwickeln und herzustellen, mittels welcher die im Rahmen der Datenübertragung im Internet anfallenden Aufgaben effizient durchgeführt werden können.

Insbesondere wurden in letzter Zeit eine Vielzahl von Netzwerkprozessoren, die auch als Kommunikationsprozessoren oder NPUs bezeichnet werden, entwickelt. Netzwerkprozessoren sind programmierbar und weisen spezifische System-on-chip(SoC)-Architekturen auf, welche an die Verarbeitung von Datenpaketen angepasst sind.

Netzwerkprozessoren weisen typischerweise Prozessorelemente, Speicherhierarchien, Verbindungsnetzwerke, das heißt interne Kommunikationsnetzwerke, und Kommunikationsschnittstellen auf.

Bei der Entwicklung einer Architektur für einen Netzwerkprozessor liegt der Schwerpunkt typischerweise auf der Optimierung des Zusammenspiels der Prozessorelemente, der Speicherhierarchien und der Verbindungsnetzwerke.

Kommunikationsschnittstellen werden jedoch häufig in ihrer Komplexität unterschätzt, bei der Systementwicklung wenig beachtet und verhältnismäßig spät im Entwicklungsprozess separat als Standard-IP(Intellectual Property)-Blöcke vorgesehen.

Um die Anforderungen von vernetzten High-End-Computersystemen an Kommunikationsschnittstellen hinsichtlich Effizienz und Performance, das heißt Bandbreite pro Pin eines Netzwerkprozessors, erfüllen zu können, sind jedoch zunehmend Kommunikationsschnittstellen erforderlich, die die Datenübertragung mittels neu entwickelter, Kommunikationsprotokolle auf Chipebene (chip-level) und auf Boardebene (board-level), wie beispielsweise Hypertransport, RapidIO und PCI-Express, ermöglichen. Solche Kommunikationsschnittstellen werden beispielsweise in [9] beschrieben.

Die Entwicklung dieser Kommunikationsprotokolle ist jedoch nicht abgeschlossen und es werden häufig Änderungen der Kommunikationsprotokoll-Standards vorgenommen.

Zum Entwerfen von Netzwerkprozessoren, die komplexe Kommunikationsschnittstellen, welche die Datenübertragung gemäß solcher oben genannten Kommunikationsprotokolle ermöglichen, aufweisen, ist ein aufwändiger Entwurfsprozess erforderlich, da die entworfenen Netzwerkprozessoren in Hinblick auf ihre Kommunikationsschnittstellen ansonsten inflexibel und suboptimal sind.

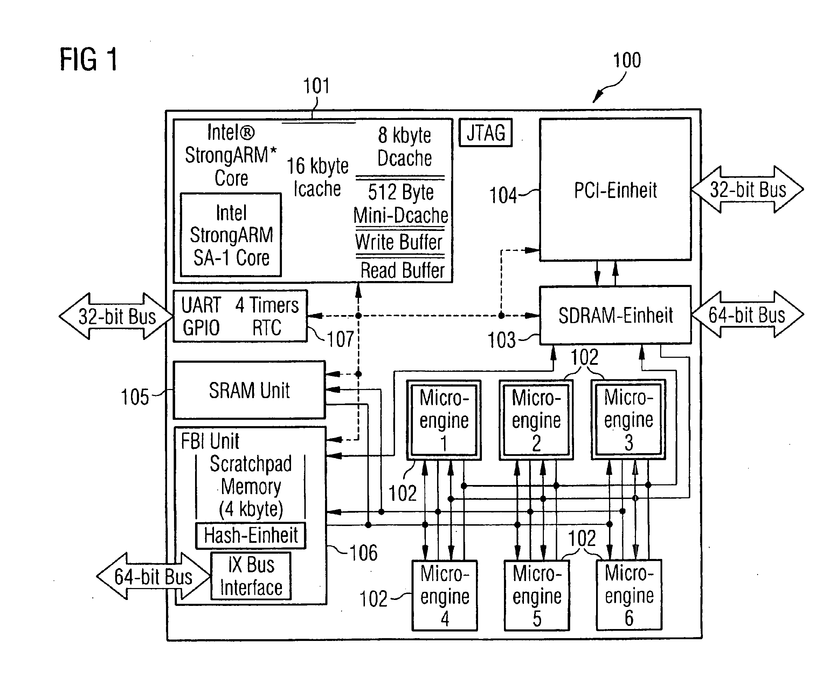

**Fig.1** zeigt einen herkömmlichen Netzwerkprozessor 100, den IXP1200 von Intel, der in [1] beschrieben ist.

Der Netzwerkprozessor 100 weist einen Mikroprozessor vom Typ StrongARM 101 sowie eine Mehrzahl von RISC-Mikroprozessoren 102 auf. Ferner weist der Netzwerkprozessor eine SDRAM-Einheit 103, die den Zugriff auf externes SDRAM (Synchronous Dynamic Random Access Memory) ermöglicht, eine PCI-Einheit 104, die eine Kommunikationsschnittstelle gemäß PCI (Peripheral Component Interconnect) bereitstellt, eine SRAM-Einheit 105, die den Zugriff auf externes SRAM (Static Random Access Memory) ermöglicht, eine FBI(First-in First-Out Bus Interface)-Einheit 106, die insbesondere eine proprietäre Kommunikationsschnittstelle, das IX (Internet eXchange) Bus Interface, bereitstellt, sowie weitere funktionale Einheiten 107 auf.

Der Flächenanteil der funktionalen Elemente, die Kommunikationsschnittstellen bereitstellen, das heißt der SDRAM-Einheit 103, der PCI-Einheit 104, der SRAM-Einheit 105 und der FBI-Einheit 106, bildet etwa 30% der Gesamtfläche der des Netzwerkprozessors 100 und verdeutlicht somit die Bedeutung der Kommunikationsschnittstellen.

Ferner zeigt die SoC-Architektur des Netzwerkprozessors 100, dass eine Vielzahl von Kommunikationsschnittstellen heterogen und individuell, das heißt mittels unterschiedlicher funktionaler Einheiten, in dem Netzwerkprozessor 100 implementiert sind.

Der Netzwerkprozessor 100 weist funktionale Einheiten auf, die Kommunikationsschnittstellen bereitstellen, welche funktionalen Einheiten komplexer sind als die RISC-Mikroprozessoren 102. Beispielsweise ist die PCI-Einheit 104, wenn sie dafür geeignet ist, eine Kommunikationsschnittstelle gemäß PCI (Version 2.2) bereitzustellen, in Hinblick auf die von ihr eingenommene Fläche etwa so groß wie vier der Mikroprozessoren 102.

Die Fläche einer funktionalen Einheit ist typischerweise ein Indiz der Komplexität der funktionalen Einheit.

Gemäß dem Stand der Technik werden Kommunikationsschnittstellen in Netzwerkprozessoren auf die im Folgenden erläuternden verschiedenen Arten implementiert.

Wie im Falle des in Fig.1 dargestellten Netzwerkprozessors 100, der wie erwähnt in [1] erläutert ist, wird jede erforderliche Kommunikationsschnittstelle separat, das heißt mittels einer separaten funktionalen Einheit, implementiert und mit dedizierten Pins gekoppelt.

Dies führt, wie oben erläutert, zu einem hohen Flächenbedarf der die Kommunikationsschnittstellen bereitstellenden funktionalen Elemente und führt ferner dazu, dass der Netzwerkprozessor eine Vielzahl heterogener Blöcke, das heißt eine Vielzahl von funktionalen Elementen, deren Struktur sich wenig ähnelt, aufweist.

Aufgrund der starken Spezialisierung der funktionalen Elemente auf spezielle Kommunikationsschnittstellen ist ferner die Flexibilität des Netzwerkprozessors 100 gering.

Bei einer anderen Klasse von Netzwerkprozessoren, beispielsweise bei dem in [2] beschriebenen Netzwerkprozessor NP4GS3 (Rainier) von IBM, werden dieselben Pins für mehrere unterschiedliche Kommunikationsschnittstellen verwendet, anschaulich gesprochen teilen sich mehrere unflexible Kommunikationsschnittstellen-Makros Pins.

Netzwerkprozessoren dieser Art erscheinen an den Pins, die für mehrere Kommunikationsschnittstellen verwendet werden, flexibel in Hinblick auf die Kommunikationsschnittstellen, weisen aber ebenfalls eine verhältnismäßig heterogene Struktur auf und die funktionalen Elemente, die die Kommunikationsschnittstellen bereitstellen, weisen wie in dem oben beschriebenen Fall einen verhältnismäßig hohen Flächenbedarf auf.

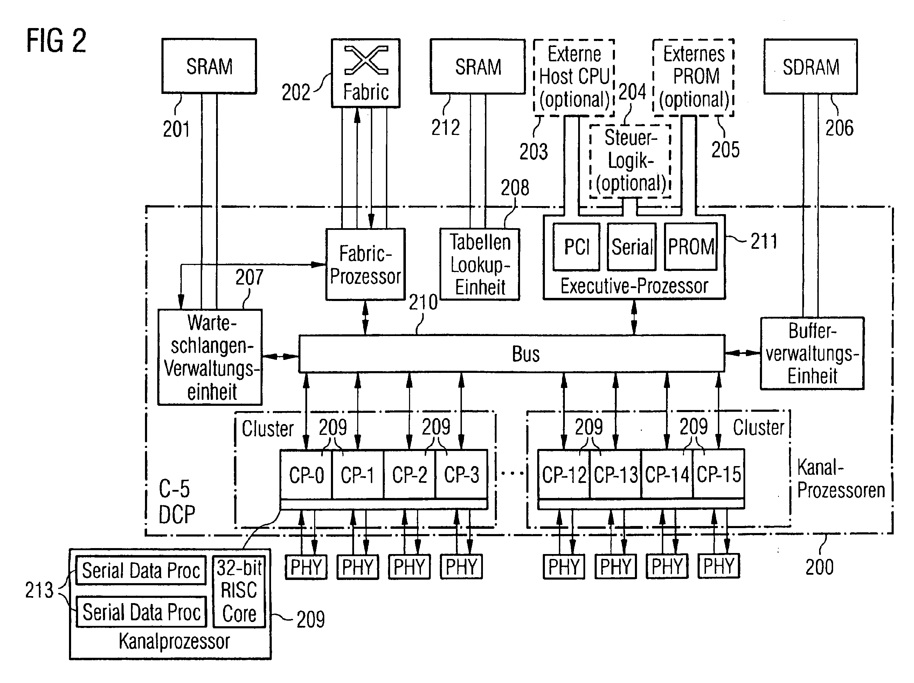

Ein Beispiel für einen Netzwerkprozessor aus einer weiteren Klasse von Netzwerkprozessoren ist in Fig.2 dargestellt.

Der **Fig.2** dargestellte Netzwerkprozessor 200 ist der C-5DCP (Digital Communications Prozessor) von Motorola, der in [3] beschrieben ist.

In der Darstellung von Fig.2 ist der Netzwerkprozessor 200 mit mehreren externen funktionalen Elementen, einem ersten SRAM 201, einem zweiten SRAM 212, einem Fabric 202 beispielsweise einem Switch-Fabric, einem externen Mikroprozessor 203, einer Steuereinheit 204, einem externen PROM (Programmable Read Only Memory) 205 sowie einem SDRAM 206 gekoppelt.

Neben einer Mehrzahl von funktionalen Elementen, beispielsweise einer Warteschlangenverwaltungseinheit 207 und einer Tabellen-Lookup-Einheit 208 weist der Netzwerkprozessor 200 eine Mehrzahl von Prozessorelementen (Kanalprozessoren). 209 auf.

Die Prozessorelemente 209 sind mittels eines Computerbusses 210 untereinander gekoppelt.

Die Prozessorelemente 209 verfügen über Koprozessoren 213. Die Koprozessoren 213 sind in verhältnismäßig geringem Maße (micro-) programmierbar und stellen bei geeigneter Programmierung Kommunikationsschnittstellen, beispielsweise gemäß ATM (Asynchronous Transfer Mode) oder Ethernet, bereit. Aufgrund der Programmierbarkeit der Koprozessoren 213 weist der Netzwerkprozessor 200 eine verhältnismäßig mittlere Flexibilität, eine gegenüber dem oben beschriebenen Netzwerkprozessor geringere Heterogenität sowie einen verhältnismäßig mittleren Flächenbedarf der funktionalen Elemente, die Kommunikationsschnittstellen bereitstellen, auf.

Bei einer weiteren Klasse von Netzwerkprozessoren, beispielsweise bei dem Netzwerkprozessor IP3023 von Ubicom, der in [4] beschrieben ist, werden Kommunikationsschnittstellen durch Programmierung eines zentralen General-Purpose-Prozessors bereitgestellt, anschaulich gesprochen werden die Kommunikationsschnittstellen somit vollständig in Software implementiert. Mit zentral ist gemeint, dass der General-Purpose-Prozessor auch weitere Aufgaben eventuell gleichzeitig ausführt.

Auf diese Weise wird eine verhältnismäßig sehr hohe Flexibilität im Hinblick auf die Bereitstellung von Kommunikationsschnittstellen erreicht und es ist, wenn ein General-Purpose-Prozessor auf dem Netzwerkprozessor zur Verfügung steht, kein zusätzlicher Flächenbedarf für die Bereitstellung von Kommunikationsschnittstellen erforderlich.

Damit mittels solch eines Netzwerkprozessors die Anforderungen, die bei Echtzeitanwendungen auftreten, erfüllt werden können, bestehen jedoch typischerweise erhebliche Anforderungen an das für den Netzwerkprozessor verwendete Betriebssystem, die nur mit erheblichem Aufwand erfüllt werden können.

Da ferner mittels Programmierung eines General-Purpose-Prozessors nur Kommunikationsschnittstellen mit verhältnismäßig geringer Leistung bereitgestellt werden können, das heißt mittels welcher nur eine Datenübertragung mit verhältnismäßig geringer Datenrate möglich ist, kann die Bereitstellung von Kommunikationsschnittstellen durch Programmierung eines General-Purpose-Prozessors nur für Kommunikationsschnittstellen mit geringer Leistungsanforderung verwendet werden.

In [5] ist eine frühere Version des in Fig.2 dargestellten Netzwerkprozessors beschrieben.

In [6] ist eine Architektur eines Datenverarbeitungssystems beschrieben, bei der eine Eingabeeinrichtung eingerichtet ist, einen Strom von Datenpaketen zu empfangen und eine Mehrzahl von Verarbeitungselementen eingerichtet sind, die von der Eingabeeinrichtung empfangenen Daten zu verarbeiten.

Druckschrift [7] beschreibt ein Feld von parallelen, programmierbaren Verarbeitungelementen, die mittels eines Switching-Netzwerks miteinander gekoppelt sind.

In [8] ist eine System-on-Chip-Architektur beschrieben, die skalierbare, verteilte Verarbeitungsmöglichkeiten und Speichermöglichkeiten mittels einer Mehrzahl von Verarbeitungsschichten bereitstellt.

Der Erfindung liegt das Problem zugrunde, für einen Netzwerkprozessor Kommunikationsschnittstellen mit hoher Leistung bereitzustellen, wobei die funktionalen Elemente, mittels welcher die Kommunikationsschnittstellen bereitgestellt werden, einen geringen Flächenbedarf aufweisen und der Netzwerkprozessor eine verhältnismäßig geringe Heterogenität aufweist sowie in Hinblick auf die Kommunikationsschnittstellen flexibel ist.

Das Problem wird durch einen Netzwerkprozessor mit den Merkmalen gemäß den unabhängigen Patentansprüchen gelöst.

Es wird ein Netzwerkprozessor mit einer Mehrzahl von programmierbaren Prozessorelementen bereitgestellt, bei dem jedes Prozessorelement der Mehrzahl von Prozessorelementen zum Bereitstellen von Kommunikationsnetzwerkprotokoll-Grundfunktionen eingerichtet ist; ein erster Teil der Mehrzahl von Prozessorelementen als Kommunikationsnetzwerk-Prozessorelemente eingerichtet sind; und ein zweiter Teil der Mehrzahl von Prozessorelementen als Schnittstellenprozessorelemente eingerichtet ist, die eingerichtet sind, gemäß einem Kommunikationsprotokoll für den Netzwerkprozessor eine Ausgangskommunikationsschnittstelle und/oder eine Eingangskommunikationsschnittstelle bereitzustellen.

Eine der Erfindung zu Grunde liegende Idee kann anschaulich darin gesehen werden, dass vollständige Prozessorelemente, die sich nur durch ihre Programmierung von den Prozessorelementen, die die "eigentlichen" Paketverarbeitungsaufgaben und Kommunikationsnetzwerkaufgaben durchführen, unterscheiden, zum Bereitstellen von Kommunikationsschnittstellen verwendet werden.

Eine weitere der Erfindung zu Grunde liegende Idee kann darin gesehen werden, dass die funktionale Ähnlichkeit von Einheiten, die Kommunikationsschnittstellen bereitstellen, zu den problemspezifisch ausgestalteten Prozessorelementen eines Netzwerkprozessors ausgenutzt wird.

Auf diese Weise wird eine hohe Homogenität der Systemarchitektur des Netzwerkprozessors erreicht und insbesondere wird ein schnelles System-Design ermöglicht, wobei ein geringer Implementierungsaufwand erforderlich ist.

Ferner kann die Programmierung der Schnittstellenprozessorelemente mit denselben Entwicklungswerkzeugen erfolgen, wie die Programmierung der Kommunikationsnetzwerk-Prozessorelemente. Auf diese Weise wird anschaulich eine homogene Entwicklungsumgebung erreicht.

Ferner ist der bereitgestellte Netzwerkprozessor in Hinblick auf seine Kommunikationsschnittstellen aufgrund der Programmierbarkeit der Schnittstellenprozessorelemente sehr flexibel. Deshalb kann der Netzwerkprozessor im Rahmen eines breiten Spektrums von Kommunikationsprotokollen eingesetzt werden, beispielsweise im Rahmen einer beliebigen Kombination von Kommunikationsprotokollen, die beispielsweise durch eine Marktallianz entstanden ist.

Ferner ist es möglich, dass der Netzwerkprozessor an sich entwickelnde Kommunikationsschnittstellen-Standards angepasst wird. Dies ist von erheblicher Bedeutung, da im Bereich von Kommunikationsnetzwerken eine Vielzahl von noch in Entwicklung befindlichen Kommunikationsschnittstellen-Standards vorhanden sind.

Verglichen mit einem Netzwerkprozessor, dessen Kommunikationsschnittstellen eine bestimmte Leistung aufweisen, ist bei dem bereitgestellten Netzwerkprozessor der Flächenbedarf der funktionalen Einheiten, die dieselben Kommunikationsschnittstellen bei gleicher Leistung bereitstellen, sehr gering.

Bevorzugte Weiterbildungen der Erfindung ergeben sich aus den abhängigen Ansprüchen.

Es ist bevorzugt, dass jedes Prozessorelement der Mehrzahl von Prozessorelementen eine Bit-Operation-Einheit zum Ausführen von Operationen auf Bitebene, einen Timer zum Bereitstellen eines getakteten Zählers und eine Prüfsummenverarbeitungseinheit zum Verarbeiten von Prüfsummen aufweist.

Insbesondere werden unter Kommunikationsnetzwerkprotokoll-Grundfunktionen beispielsweise Operationen auf Bitebene und Prüfsummenverarbeitung verstanden.

Ferner ist es bevorzugt, dass jedes Prozessorelement der Mehrzahl von Prozessorelementen einen Speicher zum Speichern von Daten, von Programminstruktionen und von Zustandsinformationen und/oder eine Programminstruktion-Dekodiereinheit zum Dekodieren von Programminstruktionen aufweist.

Vorzugsweise ist die Ausgangskommunikationsschnittstelle und/oder die Eingangskommunikationsschnittstelle eine Switch-Fabric-Schnittstelle zu einer Switch-Fabric.

Es ist ferner bevorzugt, dass die Ausgangskommunikationsschnittstelle und/oder die Eingangskommunikationsschnittstelle gemäß RapidIO, Hypertransport, PCI-Express (Peripheral Component Interconnect-Express), CSIX (Common Switch Interface), Ethernet, IEEE 802.3, Token-ring oder ATM (Asynchronous Transfer Mode) eingerichtet sind/ist.

Es ist ferner bevorzugt, dass der Netzwerkprozessor ferner mindestens ein Hard-Makro aufweist und ein Prozess, dessen Realisierung zur Bereitstellung der Ausgangskommunikationsschnittstelle und/oder der Eingangskommunikationsschnittstelle erforderlich ist, mittels auf mindestens einem der Schnittstellenprozessorelemente ausgeführten Programminstruktionen oder mittels des mindestens einen Hard-Makros realisiert ist.

Ausführungsbeispiele der Erfindung sind in den Figuren dargestellt und werden im Weiteren näher erläutert.
- Figur 1: zeigt einen herkömmlichen Netzwerkprozessor.
- Figur 2: zeigt einen herkömmlichen Netzwerkprozessor.
- Figur 3: zeigt ein Computernetzwerk gemäß einem Ausführungsbeispiel der Erfindung.
- Figur 4: zeigt einen Router gemäß einem Ausführungsbeispiel der Erfindung.
- Figur 5: zeigt einen Router gemäß einem Ausführungsbeispiel der Erfindung.
- Figur 6: zeigt einen Netzwerkprozessor gemäß einem Ausführungsbeispiel der Erfindung.
- Figur 7: zeigt ein Prozessorelement gemäß einem Ausführungsbeispiel der Erfindung.
- Figur 8: zeigt ein Datenflussdiagramm gemäß einem Ausführungsbeispiel der Erfindung.

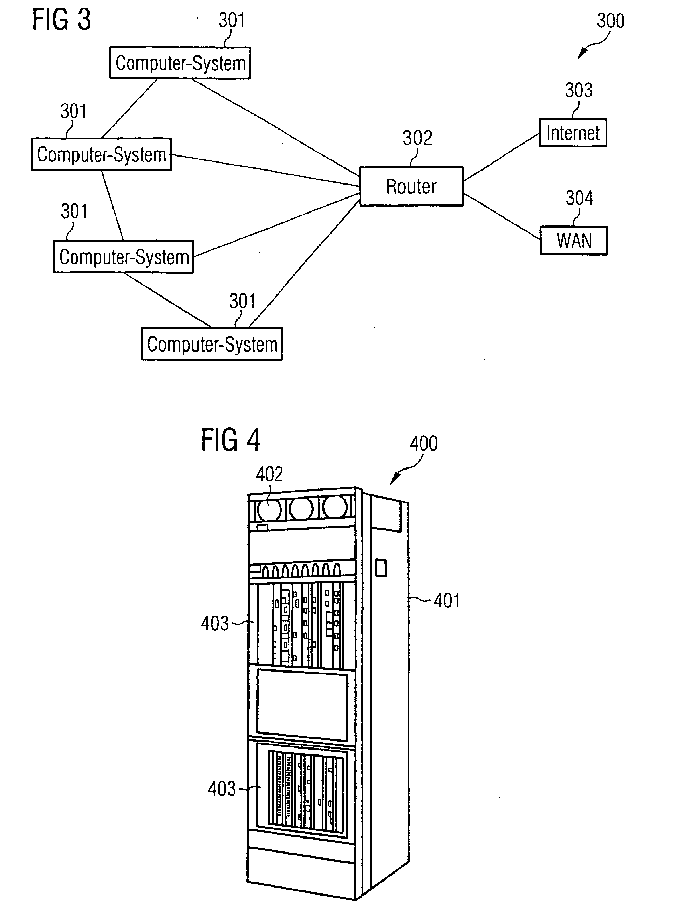

**Fig.3** zeigt ein Computernetzwerk 300 gemäß einem Ausführungsbeispiel der Erfindung.

Eine Mehrzahl von Computersystemen 301, beispielsweise Personal-Computer oder Workstations, sind untereinander und mit einem Router 302 gekoppelt.

Die Computersysteme 301 kommunizieren untereinander und mit dem Router 302 gemäß einem Kommunikationsprotokoll entsprechend des Layers 2 des OSI/ISO Referenz Modells, beispielsweise Ethernet, IEEE 802.3 (Institute of Electrical and Electronics Engineers), Token-ring oder ATM (Asynchronous Transfer Mode).

Mittels des Routers 302 sind die Computersysteme 301 mit dem Internet 303, einem WAN (Wide Area Network) 304 und eventuell weiteren Computernetzwerken gekoppelt.

Der Router 302 stellt unter anderem sicher, dass Daten, die von einem der Computersysteme 301 an das Internet 303 oder an das WAN 304 gesendet werden, ihr vorgesehenes Ziel erreichen und dass Daten, die von einem Computer, beispielsweise einem Server-Computer, aus dem Internet 303 oder dem WAN 304 an eines der Computersysteme 301 gesendet werden, dieses Computersystem erreichen.

Im Rahmen dieser Aufgabe führt der Router 302 Aufgaben, wie beispielsweise Adressen-Lookups, durch.

Der Router 302 kann weitere Aufgaben haben, die das Klassifizieren, das Prioritisieren oder das Routen von Datenpaketen betreffen, oder er kann beispielsweise eine Firewall aufweisen, die die Sicherheit der Computersysteme 301 gegen Hackerangriffe aus dem Internet 303 oder dem WAN 304 gewährleistet.

Der Router 302 kann beispielsweise ausgestaltet sein, wie im Folgenden mit Bezug auf Fig.4 erläutert.

**Fig.4** zeigt einen Router 400 gemäß einem Ausführungsbeispiel der Erfindung.

Neben einem Gehäuse 401 und einer Mehrzahl von Lüftern 402 weist der Router 400 eine Vielzahl von Line-Cards 403 auf, die auf zwei Line-Card-Blöcke verteilt sind und in dafür vorgesehenen Steckplätzen des Routers 400 angebracht sind.

Ferner kann man in Fig.4 erkennen, dass die Line-Cards 403 Buchsen aufweisen, die den Anschluss von Kabelverbindungen ermöglichen, mittels welcher der jeweiligen Line-Card Daten zugeführt werden können und mittels welcher die jeweilige Line-Card 403 Daten versenden kann.

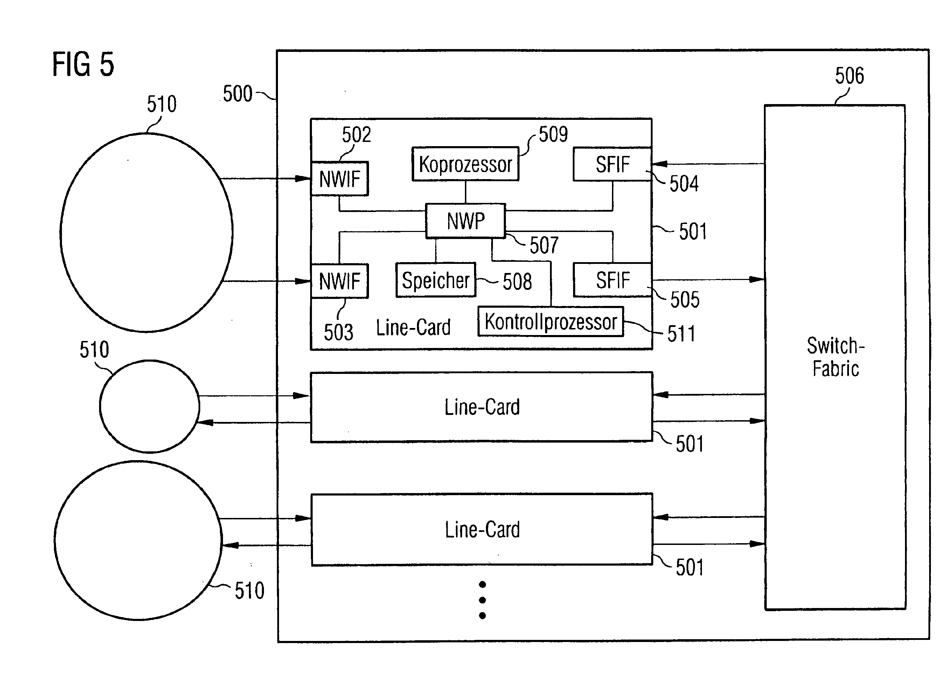

Die Architektur des Routers 400 wird im Folgenden mit Bezug auf Fig.5 erläutert.

**Fig.5** zeigt einen Router 500 gemäß einem Ausführungsbeispiel der Erfindung.

Der Router 500 weist eine Mehrzahl von Line-Cards 501 auf, mittels welcher der Router 500 jeweils mit einem Computernetzwerk 510 gekoppelt ist, auf.

Ein Computernetzwerk ist beispielsweise ein LAN (Local Area Network), ein WAN, wie das WAN 304, das Internet oder das von den Computersystemen 301 gebildete Computernetzwerk.

Die Line-Cards 501 sind mit einer Switch-Fabric 506 (Backplane) gekoppelt. Die Switch-Fabric 506 ermöglicht die Übertragung von Datenpaketen von einer der Line-Cards 501 zu anderen Line-Cards 501 und umgekehrt.

Der Aufbau der Line-Cards 501 wird im Folgenden exemplarisch anhand einer Line-Card 501 erläutert.

Die Line-Card 501 weist eine Eingangs-Netzwerkschnittstelle 502 und eine Ausgangs-Netzwerkschnittstelle 503 auf.

Mittels der Eingangs-Netzwerkschnittstelle 502 empfängt die Line-Card 501 Daten, die von dem Computernetzwerk 510, mit welchem die Line-Card 501 gekoppelt ist, gesendet werden.

Mittels der Ausgangs-Netzwerkschnittstelle 503 sendet die Line-Card 501 Daten an das Computernetzwerk 510.

Die Datenübertragung mittels der Eingangs-Netzwerkschnittstelle 502 und der Ausgangs-Netzwerkschnittstelle 503 wird beispielsweise gemäß dem Ethernet-Protokoll, gemäß IEEE 802.3, gemäß dem Token-ring-Protokoll oder gemäß ATM durchgeführt.

Die Line-Card 501 weist ferner eine Eingangs-Switch-Fabric-Schnittstelle 504 und eine Ausgangs-Switch-Fabric-Schnittstelle 505 auf.

Mittels der Eingangs-Switch-Fabric-Schnittstelle 504 empfängt die Line-Card 501 von der Switch-Fabric 506 an die Line-Card 501 gesendete Daten.

Mittels der Ausgangs-Switch-Fabric-Schnittstelle 505 sendet die Line-Card 501 Daten an die Switch-Fabric 506.

Die Datenübertragung zwischen der Line-Card 501 und der Switch-Fabric 506 mittels der Eingangs-Switch-Fabric-Schnittstelle 504 und der Ausgangs-Switch-Fabric-Schnittstelle 505 wird beispielsweise gemäß dem RapidIO-Protokoll, dem Hypertransport-Protokoll, dem PCI-Express-Protokoll oder dem CSIX(Common Switch Interface)-Protokoll durchgeführt.

Die Line-Card 501 weist einen Netzwerkprozessor 507 auf.

Der Netzwerkprozessor 507 ist mit der Eingangs-Netzwerkschnittstelle 502, der Ausgangs-Netzwerkschnittstelle 503, der Eingangs-Switch-Fabric-Schnittstelle 504 und der Ausgangs-Switch-Fabric-Schnittstelle 505 gekoppelt und weist funktionale Einheiten auf, die die Datenübertragung gemäß der Kommunikationsprotokolle, gemäß welcher mittels der Eingangs-Netzwerk-Schnittstelle 502, der Ausgangs-Netzwerkschnittstelle 503 und der Eingangs-Switch-Fabric-Schnittstelle 504 und der Ausgangs-Switch-Fabric-Schnittstelle 505 Daten übertragen werden, ermöglichen.

Eine Aufgabe des Netzwerkprozessors 507 ist es beispielsweise, Daten, die der Netzwerkprozessor 507 mittels der Eingangs-Netzwerkschnittstelle 502 empfängt, auf Übertragungsfehler zu überprüfen, beispielsweise eine CRC-Fehlerüberprüfung durchzuführen und die Daten mittels der Ausgangs-Switch-Fabric-Schnittstelle 505 an das Switch-Fabric 506 weiterzuleiten.

Das Switch-Fabric 506 leitet seinerseits die Daten an eine der Line-Cards 501 mittels der Eingangs-Switch-Fabric-Schnittstelle 504 weiter, in Abhängigkeit von dem vorgesehenen Empfänger der Daten, dem mit der jeweiligen Line-Card 501 gekoppelten Computernetzwerk 510 und der Auslastung des mit der Line-Card 501 gekoppelten Computernetzwerks 510, so dass beispielsweise eine Lastverteilung (Load Balancing) erreicht wird.

Daten, die das Switch-Fabric 506 mittels der Eingangs-Switch-Fabric-Schnittstelle 504 an den Netzwerkprozessor 507 zum Weiterleiten an das mit der Line-Card 501 gekoppelte Computernetzwerk 510 sendet, verarbeitet der Netzwerkprozessor 507 und leitet sie mittels der Ausgangs-Netzwerkschnittstelle 503 an das physikalische Netzwerk weiter.

Die Verarbeitung kann beispielsweise darin bestehen, dass der Netzwerkprozessor 507 Fehlerprüfsummen zu den Daten hinzufügt oder die Daten verschlüsselt.

Eine weitere Aufgabe des Netzwerkprozessors 507 besteht darin, dass er Daten, die er gemäß einem bestimmten Kommunikationsprotokoll (siehe die obigen Beispiele) mittels der Eingangs-Netzwerkschnittstelle 502 oder der Eingangs-Switch-Fabric-Schnittstelle 504 empfängt, gemäß einem typischerweise unterschiedlichen Kommunikationsprotokoll (siehe ebenfalls obige Beispiele) mittels der Ausgangs-Netzwerkschnittstelle 503 oder der Ausgangs-Switch-Fabric-Schnittstelle 505 versendet.

Anschaulich ist somit eine Aufgabe des Netzwerkprozessors 507 die Übersetzung von einem Kommunikationsprotokoll in ein anderes.

Der Netzwerkprozessor 507 ist ferner mit einem Koprozessor 509 gekoppelt, der den Netzwerkprozessor 507 bei der Durchführung der Aufgaben des Netzwerkprozessors 507. unterstützt, sowie mit einem übergeordneten Kontrollprozessor 511, welcher die Arbeit des Netzwerkprozessors 507 koordiniert.

Der Router 500 kann in einer Ausführungsform auch einen gemeinsamen Kontrollprozessor 511 für alle Line-Cards 501 aufweisen. Beide Varianten (ein Kontrollprozessor 511 für jede Line-Card 501 oder ein Kontrollprozessor 511 für alle Line-Cards 501) wird von PCI-Express unterstüzt.

Ferner greift der Netzwerkprozessor 507 auf einen (oder mehrere) Speicher 508 zu, mit welchen der Netzwerkprozessor 507 gekoppelt ist.

Der Speicher 508 enthält beispielsweise eine Lookup-Tabelle, mittels welcher der Netzwerkprozessor 507 den nächsten Hop für ein Datenpaket, das der Netzwerkprozessor 507 empfangen hat, bestimmen kann.

Der Speicher 508 ist beispielsweise ein SRAM oder ein SDRAM.

Neben dem externen Speicher 508 weist der Netzwerkprozessor 507 auch einen internen Speicher (nicht gezeigt) auf.

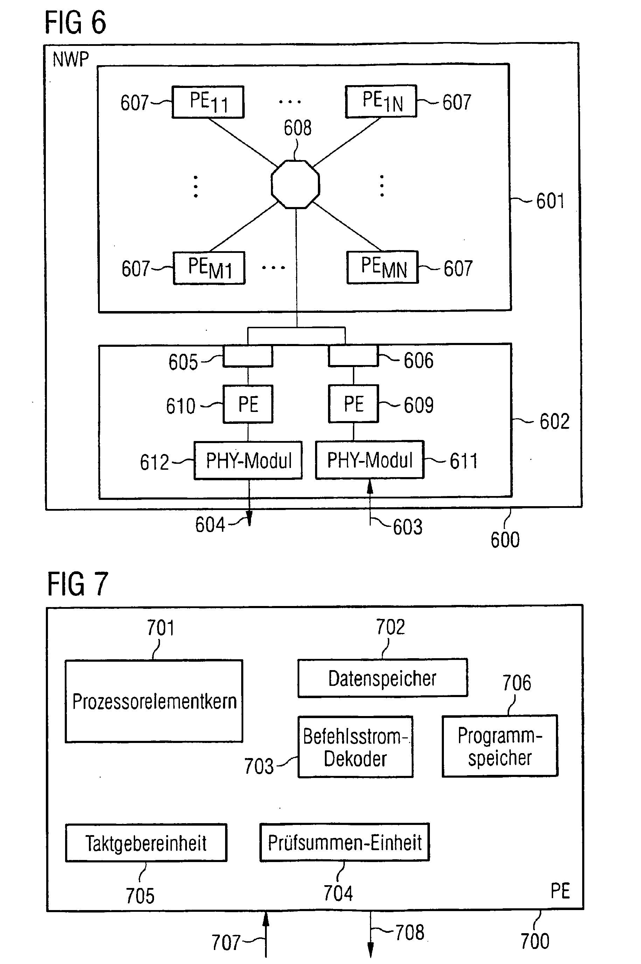

Der Netzwerkprozessor 507 kann beispielsweise eingerichtet und ausgestaltet sein, wie im Folgenden mit Bezug auf Fig.6 erläutert.

**Fig.6** zeigt einen Netzwerkprozessor 600 gemäß einem Ausführungsbeispiel der Erfindung.

Der Netzwerkprozessor 600 weist einen Netzwerkprozessorkern (NPU Core) 601 und eine Kommunikationsschnittstellen-Einheit 602 auf.

Die Kommunikationsschnittstellen-Einheit 602 ermöglicht in diesem Beispiel die Datenübertragung mittels der in Fig.5 gezeigten Eingangs-Switch-Fabric-Schnittstelle 504 und der Ausgangs-Switch-Fabric-Schnittstelle 505 und ermöglicht somit die Datenübertragung gemäß der entsprechenden Kommunikationsprotokolle (siehe die oben genannten Beispiele).

Die Datenübertragung mittels der Eingangs-Netzwerkschnittstelle 502 und/oder der Ausgangs-Netzwerkschnittstelle 503 werden mittels einer (oder mehrerer) weiteren Kommunikationsschnittstellen-Einheit(en) (nicht gezeigt) ermöglicht.

Die weitere(n) Kommunikationsschnittstellen-Einheit(en) stellt/en in einer Ausführungsform ebenso die Schnittstellen zwischen dem Netzwerkprozessor 507 und dem Koprozessor 509 und/oder zwischen dem Netzwerkprozessor 507 und dem Kontrollprozessor 511 bereit, wobei ein entsprechendes Kommunikationsprotokoll verwendet wird, beispielsweise Hypertransport.

Mit einem Eingang 603 der Kommunikationsschnittstellen-Einheit 602 ist zum Beispiel die Eingangs-Switch-Fabric-Schnittstelle 504 gekoppelt und mit einem Ausgang 604 der Kommunikationsschnittstellen-Einheit 602 ist in diesem Beispiel die Ausgangs-Switch-Fabric-Schnittstelle 505 gekoppelt.

Der Netzwerkprozessor 600 ist gemäß einer System-on-chip (SoC)-Architektur ausgestaltet.

Aus Sicht der physikalischen Schicht sind der Eingang 603 und der Ausgang 604 als Pins des Netzwerkprozessors 600 ausgestaltet.

Der Netzwerkprozessorkern 601 ist mittels einer Ausgangsschnittstelle 605 und mittels einer Eingangsschnittstelle 606 mit der Kommunikationsschnittstellen-Einheit 602 gekoppelt.

Die Eingangsschnittstelle 605 und die Ausgangsschnittstelle 606 sind als Standard-SoC-Verbindungsschnittstellen ausgestaltet, beispielsweise gemäß einem herkömmlichen Mikroprozessor-Computerbus.

Der Netzwerkprozessorkern 601 weist eine Mehrzahl von Kommunikationsnetzwerk-Prozessorelementen 607 auf. Die Kommunikationsnetzwerk-Prozessorelemente 607 sind mittels eines Verbindungsnetzwerks 608 untereinander gekoppelt.

Das Verbindungsnetzwerk 608 kann eine beliebige Topologie aufweisen, beispielsweise können die Kommunikationsnetzwerk-Prozessorelemente 607 vollständig miteinander gekoppelt sein oder gemäß einer Ringtopologie miteinander gekoppelt sein.

Das Verbindungsnetzwerk 608 ist mittels der Ausgangsschnittstelle 605 und der Eingangsschnittstelle 606 mit der Kommunikationsschnittstellen-Einheit 602 gekoppelt.

In diesem Ausführungsbeispiel sind die Kommunikationsnetzwerk-Prozessorelemente 607 in Form einer M x N-Matrix angeordnet. M und N sind beliebige natürliche Zahlen, insbesondere ist die Anzahl der Kommunikationsnetzwerk-Prozessorelemente 607 beliebig.

Die Kommunikationsschnittstellen-Einheit 602 weist ein Eingangs-Prozessorelement 609 und ein Ausgangs-Prozessorelement 610 auf.

Das Eingangs-Prozessorelement 609 ist mit dem Eingang 603 mittels eines ersten PHY-Moduls 611 und mit der Eingangs-Schnittstelle 606 gekoppelt.

Das Ausgangs-Prozessorelement 610 ist mit dem Ausgang 604 mittels eines zweiten PHY-Moduls 612 und mit der Ausgangs-Schnittstelle 605 gekoppelt.

Das erste PHY-Modul 611 und das zweite PHY-Modul 612 implementieren die physikalische Schicht der Kommunikationsschnittstelle, die mittels der Kommunikationsschnittstellen-Einheit 602 bereitgestellt wird.

Die Prozessorelemente 607, 609, 610 des Netzwerkprozessors 600, das heißt die Kommunikationsnetzwerk-Prozessorelemente 607, das Ausgangs-Prozessorelement 610 und das Eingangs-Prozessorelement 609 sind programmierbar und weisen jeweils einen eigenen Speicher (nicht gezeigt) für den jeweiligen Programmcode, die jeweiligen Zustandsinformationen und Daten auf.

Der genauere Aufbau der Prozessorelemente 607, 609, 610 wird weiter unten mit Bezug auf Fig.7 erläutert.

Der Speicher des Ausgangs-Prozessorelements 610 kann von dem Netzwerkprozessorkern 601 mittels der Ausgangs-Schnittstelle 605 direkt angesprochen werden und der Speicher des Eingangs-Prozessorelements 609 kann mittels der Eingangs-Schnittstelle 606 direkt von dem Netzwerkprozessorkern 601 angesprochen werden.

Somit haben der Netzwerkprozessorkern 601 und die Kommunikationsnetzwerk-Prozessorelemente 607 Zugriff auf die in dem Speicher des Ausgangs-Prozessorelements 610 und im Speicher des Eingangs-Prozessorelements 609 gespeicherten Daten und insbesondere auf die mittels der Kommunikationsschnittstellen-Einheit 602 zu übertragenden und empfangenden Daten, die in den Übertragungsspeichern (Transaction-Speichern), die jeweils einen Teil des Speichers des Ausgangs-Prozessorelements 610 und des Speichers des Eingangs-Prozessorelements 609 bilden, gespeichert sind.

Das Ausgangs-Prozessorelement 610 ermöglicht bei geeigneter Programmierung das Versenden von Daten mittels des Ausgangs 604 gemäß einem gewünschten, der Programmierung des Ausgangs-Prozessorelements 610 entsprechenden Kommunikationsprotokoll.

Das Eingangs-Prozessorelement 609 ermöglicht bei geeigneter Programmierung den Empfang von Daten mittels des Eingangs 603 gemäß einem der Programmierung des Eingangs-Prozessorelements 609 entsprechenden Kommunikationsprotokoll.

Die Kommunikationsnetzwerk-Prozessorelemente 607 greifen beispielsweise mittels eines Memory-Mapping-Adressierungsverfahrens auf die von der Kommunikationsschnittstellen-Einheit 602 bereitgestellten Kommunikationsschnittstellen zu.

In diesem Ausführungsbeispiel weist die Kommunikationsschnittstellen-Einheit 602 nur zwei Prozessorelemente, nämlich das Eingangs-Prozessorelement 609 und das Ausgangs-Prozessorelement 610, auf.

Insbesondere ist für das Senden von Daten und für das Empfangen von Daten, nur jeweils ein Prozessorelement vorgesehen.

In anderen Ausführungsformen kann die Kommunikationsschnittstellen-Einheit 602 jedoch eine oder mehrere Prozessorelemente aufweisen, je nach den Leistungsanforderungen an die mittels der Kommunikationsschnittstellen-Einheit 602 bereitgestellten Kommunikationsschnittstellen und der Datendurchsatzrate, die mittels der Kommunikationsschnittstellen-Einheit 602 erreicht werden soll.

**Fig.7** zeigt ein Prozessorelement 700 gemäß einem Ausführungsbeispiel der Erfindung.

Das Prozessorelement 700 weist einen Prozessorelementkern 701, einen Datenspeicher 702, einen Befehlsstrom-Dekoder 703, eine Prüfsummenverarbeitungseinheit 704, eine Timereinheit 705 sowie einen Programmspeicher 706 auf.

Der Befehlsstrom-Dekoder (Instruction Stream Decoder) 703 dekodiert in dem Programmspeicher 706 gespeicherte Programminstruktionen und führt sie dem Prozessorelementkern 701 zu, welcher die dekodierten Programminstruktionen ausführt.

Bei der Ausführung von Programminstruktionen greift der Prozessorelementkern 701 gegebenenfalls auf den Datenspeicher 702 zu. Beispielsweise sind in dem Datenspeicher 702 Datenpakete gespeichert, die der Prozessorelementkern 701 gemäß der dekodierten Programminstruktionen verarbeitet.

Die Timereinheit 705 stellt einen getakteten Zähler für das Prozessorelement bereit und damit eine Zeitbasis zur Realisierung der Kommunikationsprotokollfunktion bereit.

Die Prüfsummenverarbeitungseinheit 704, beispielsweise eine CRC-Einheit, ist eine funktionale Einheit, die darauf spezialisiert ist, Prüfungsummenverarbeitungen vorzunehmen.

Beispielsweise ist es mittels der Prüfsummenverarbeitungseinheit 704 möglich, effizient das CRC-Feld im Nachrichtenkopf (Header) eines Datenpakets zu berechnen.

Der Befehlssatz des Prozessorelements 700, entsprechend welchem die Programminstruktionen, die in dem Programmspeicher 706 gespeichert sind, ausgestaltet sind, enthält insbesondere Instruktionen, die Operationen auf Bitebene (Bit Level Operations) ermöglichen. Beispielsweise könnte der Befehlssatz eine Instruktion aufweisen, die es erlaubt, ein in einem Register des Prozessorelementkerns 701 gespeichertes Datenwort bitweise zu verändern oder zwei Datenworte, die jeweils in einem Register des Prozessorelementkerns 701 gespeichert sind, bitweise mittels einer logischen UND-Operation zu verknüpfen und das Ergebnis in einem dritten Register des Prozessorelementkerns 701 zu speichern.

Das Prozessorelement 700 weist ferner einen Eingang 707 und einen Ausgang 708 auf.

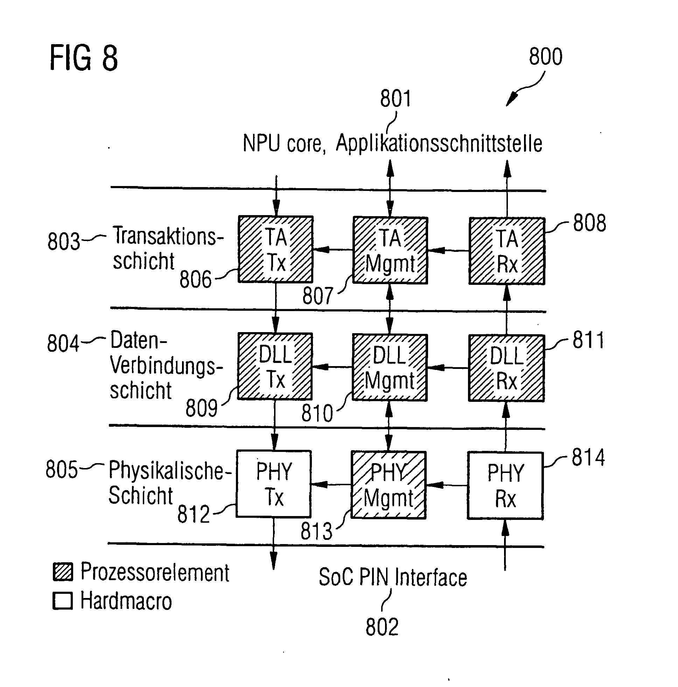

**Fig.8** zeigt ein Datenflussdiagramm 800 gemäß einem Ausführungsbeispiel der Erfindung.

Das Datenflussdiagramm 800 illustriert die Funktion der Kommunikationsschnittstellen-Einheit 602, die in Fig.6 dargestellt ist und oben erläutert ist.

Die Funktion der Kommunikationsschnittstellen-Einheit 602 ist als Prozessnetzwerk mit Prozessen 806 bis 814 dargestellt.

Die Pfeile illustrieren den Fluss von Daten (transactions) von dem Netzwerkprozessorkern 801 zu den Pins 802 und umgekehrt und zwischen den Prozessen 806 bis 814 des Prozessnetzwerks.

Die Prozesse 806 bis 814 sind in drei Schichten 803 bis 805, in die Transaktionsschicht (Transaction Layer) 803, die Datenverbindungsschicht (Data Link Layer) 804, und die physikalische Schicht (Physical Layer) 805 eingeteilt.

Die Prozesse der Transaktionsschicht 803 sind ein Transaktionsschicht-Übertragungsprozess 806, ein Transaktionsschicht-Steuerprozess 807, und ein Transaktionsschicht-Empfangsprozess 808.

Die Prozesse der Datenverbindungsschicht 804 sind ein Datenverbindungsschicht-Übertragungsprozess 809, ein Datenverbindungsschicht-Steuerprozess 810 und ein Datenverbindungsschicht-Empfangsprozess 811.

Die Prozesse der physikalischen Schicht 805 sind ein Physikalische-Schicht-Übertragungsprozess 812, ein Physikalische-Schicht-Steuerprozess 813 und ein Physikalische-Schicht-Empfangsprozess 814.

Mittels des Transaktionssicht-Übertragungsprozesses 806, des Datenverbindungsschicht-Übertragungsprozesses 809 und das Physikalische-Schicht-Übertragungsprozesses 812 werden Daten von dem Netzwerkprozesserkern 801 versendet, wobei jeder der Prozesse 806, 809, 812 die für die Schicht 803, 804, 805, der er angehört, spezifischen Aufgaben durchführt.

Analog empfängt der Netzwerkprozessorkern 801 mittels des Physikalische-Schicht-Empfangsprozesses 814, des Datenverbindungsschicht-Empfangsprozesses 811 und des Transaktionsschicht-Empfangsprozesses 808 Daten, wobei jeder der Prozesse 808, 811, 814 die für die jeweilige Schicht 803, 804, 805 spezifischen Aufgaben durchführt, der er angehört.

Steuerinformationen und Verwaltungsinformationen werden zwischen den einzelnen Prozessen 806 bis 814 ausgetauscht, so dass die Kommunikationsschnittstellen-Einheit 602 beispielsweise auf empfangene Daten unmittelbar antworten kann.

Weist die Kommunikationsschnittstellen-Einheit 602 mehrere Prozessorelemente auf, so muss die Topologie, gemäß welcher die Prozessorelemente gekoppelt sind, und das Verteilen der Aufgaben auf die Prozessorelemente (Task Mapping) den dargestellten Datenfluss 800 ermöglichen.

Beispielsweise ist es wichtig, dass der unidirektionale Übertragungspfad (Transmit-Pfad), das heißt der Datenfluss-Pfad der von dem Transaktionsschicht-Übertragungsprozess 806, dem Datenverbindungsschicht-Übertragungsprozess 809 und dem Physikalische-Schicht-Übertragungsprozess 812 gebildet wird, und der unidirektionale Empfangspfad (Receive-Pfad), das heißt der Datenfluss-Pfad, der von dem Physikalische-Schicht-Empfangsprozess 814, dem Datenverbindungsschicht-Empfangsprozess 811 und dem Transaktionsschicht-Empfangsprozess 808 gebildet wird, miteinander gekoppelt sind, sodass sie Informationen austauschen können, wie es in Fig.8 illustriert ist.

Die Prozesse 806 bis 814 sind Software-Prozesse, die mittels auf den Prozessorelementen der Kommunikationsschnittstellen-Einheit 602 ausgeführten Programminstruktionen realisiert werden, außer des Physikalische-Schicht-Übertragungsprozesses 812 und des Physikalische-Schicht-Empfangsprozesses 814, welche jeweils mittels eines Hard-Makros realisiert sind.

In diesem Fall ist der Physikalische-Schicht-Übertragungsprozess 812 mittels des zweiten PHY-Moduls 612 realisiert und der Physikalische-Schicht-Empfangsprozess 814 ist mittels des ersten PHY-Moduls 611 realisiert.

In einer anderen Ausführungsform weist die Kommunikationsschnittstellen-Einheit 602 keine Prozessorelemente 609, 610 auf, sondern die Kommunikationsschnittstellen-Einheit 602 stellt eine Kommunikationsschnittstelle mittels Prozessorelementen bereit, die in dem Netzwerkprozessorkern 601 angeordnet sind, welche Prozessorelemente mittels des On-Chip-Kommunikationsnetzwerks, das heißt in diesem Beispiel das Verbindungsnetzwerk 608 und der Ausgangsschnittstelle 605 und der Eingangsschnittstelle 606, auf die PHY-Blöcke, das heißt auf das erste PHY-Modul 611 und auf das zweite PHY-Modul 612, zugreifen.

Anschaulich wird bei dieser Ausführungsform somit die Schnittstellen-Funktion auf reguläre Prozessorelemente abgebildet.

Bei dieser Ausführungsform ist ein höherer Kommunikationsaufwand erforderlich, jedoch ist es möglich, die Anzahl der zur Bereitstellung der Kommunikationsschnittstelle verwendeten Prozessorelemente an den Bandbreitebedarf der Kommunikationsschnittstelle dynamisch anzupassen und insbesondere diese Prozessorelemente bei geringem Bandbreitenbedarf für andere Aufgaben zu verwenden.

### Bezugszeichenliste

- 100: Netzwerkprozessor
- 101: StrongArm-Mikroprozessor
- 102: RISC-Mikroprozessoren
- 103: SDRAM-Einheit
- 104: PCI-Einheit
- 105: SRAM-Einheit
- 106: FBI-Einheit
- 107: weitere funktionale Einheiten
- 200: Netzwerkprozessor
- 201: SRAM
- 202: Fabric
- 203: externer Mikroprozessor
- 204: Steuereinheit
- 205: externes PROM
- 206: SDRAM
- 207: Warteschlangenverwaltungseinheit
- 208: Tabellen-Lookup-Einheit
- 209: Prozessorelemente
- 210: Computerbus
- 211: Prozessor
- 212: SRAM
- 213: Koprozessoren
- 300: Computernetzwerk
- 301: Computersysteme
- 302: Router
- 303: Internet
- 304: WAN
- 400: Router
- 401: Gehäuse
- 402: Lüfter
- 403: Line-Cards
- 500: Router
- 501: Line-Cards
- 502: Eingangs-Netzwerkschnittstelle
- 503: Ausgangs-Netzwerkschnittstelle
- 504: Eingangs-Switch-Fabric-Schnittstelle
- 505: Ausgangs-Switch-Fabric-Schnittstelle
- 506: Switch-Fabric
- 507: Netzwerkprozessor
- 508: Speicher
- 509: Koprozessor
- 510: Computernetzwerk
- 511: Kontrollprozessor
- 600: Netzwerkprozessor
- 601: Netzwerkprozessorkern
- 602: Kommunikationsschnittstellen-Einheit
- 603: Eingang
- 604: Ausgang
- 605: Ausgangsschnittstelle
- 606: Eingangsschnittstelle
- 607: Kommunikationsnetzwerk-Prozessorelemente
- 608: Verbindungsnetzwerk
- 609: Eingangs-Prozessorelement
- 610: Ausgangs-Prozessorelement
- 611,612: PHY-Module
- 700: Prozessorelement
- 701: Prozessorelementkern
- 702: Datenspeicher
- 703: Befehlsstrom-Dekoder
- 704: Prüfsummenverarbeitungseinheit
- 705: Taktgebereinheit
- 706: Programmspeicher
- 707: Eingang
- 708: Ausgang
- 800: Datenflussdiagramm
- 801: Netzwerkprozessorkern
- 802: Pins
- 803: Transaktionsschicht
- 804: Datenverbindungsschicht
- 805: physikalische Schicht
- 806: Transaktionsschicht-Übertragungsprozess
- 807: Transaktionsschicht-Steuerprozess
- 808: Transaktionsschicht-Empfangsprozess
- 809: Datenverbindungsschicht-Übertragungsprozess
- 810: Datenverbindungsschicht-Steuerprozess
- 811: Datenverbindungsschicht-Empfangsprozess
- 812: Physikalische-Schicht-Übertragungsprozess
- 813: Physikalische-Schicht-Steuerprozess
- 814: Physikalische-Schicht-Empfangsprozess

In diesem Dokument sind folgende Veröffentlichungen zitiert:
[1] T. Halfhill. "Intel Network Processor Targets Routers". Microprocessor Report 13(12), 1999
[2] K. Krewell. "Rainier leads PowerNP family". Microprocessor Report, Jan, 2001
[3] "C-5 Digital Communications Processor". C-Port Corporation Product Brief, 2000
[4] T. Halfhill. "Ubicom's new NPU stays small". Microprocessor Report, 2003
[5] G. Giacalone, T. Brightman, et al. "A 200 MHz Digital Communications Processor". IEEE International Solid-State Circuits Conference (ISSCC), 416-417, 2000
[6] US 2003/0041163 A1
[7] WO 02/12999 A2
[8] US 2003/0105799 A1
[9] US 2003/0103490 A1

## Patentansprüche

1. Netzwerkprozessor (600) mit einer Mehrzahl von programmierbaren Prozessorelementen (607, 609, 610), bei dem
- jedes Prozessorelement der Mehrzahl von Prozessorelementen (607, 609, 610) zum Bereitstellen von Kommunikationsnetzwerkprotokoll-Grundfunktionen eingerichtet ist;
- ein erster Teil der Mehrzahl von Prozessorelementen (607) als Kommunikationsnetzwerk-Prozessorelemente eingerichtet ist; und
- ein zweiter Teil der Mehrzahl von Prozessorelementen (609, 610) als Schnittstellenprozessorelemente eingerichtet ist, wobei die Schnittstellenprozessorelemente eingerichtet sind, gemäß einem Kommunikationsprotokoll für den Netzwerkprozessor eine Ausgangskommunikationsschnittstelle und/oder eine Eingangskommunikationsschnittstelle (602) zur Ausgabe und/oder Eingabe von Datenpaketen bereitzustellen,
- wobei sich die Prozessorelemente des zweiten Teils der Mehrzahl von Prozessorelementen von den Prozessorelementen des ersten Teils der Mehrzahl von Prozessorelementen nur in ihrer Programmierung unterscheiden.

2. Netzwerkprozessor gemäß Anspruch 1, wobei jedes Prozessorelement der Mehrzahl von Prozessorelementen eine Bit-Operation-Einheit zum Ausführen von Operationen auf Bitebene, einen Timer zum Bereitstellen eines getakteten Zählers und eine Prüfsummenverarbeitungseinheit zum Verarbeiten von Prüfsummen aufweist.

3. Netzwerkprozessor gemäß Anspruch 1 oder 2, wobei jedes Prozessorelement der Mehrzahl von Prozessorelementen einen Speicher zum Speichern von Daten, von Programminstruktionen und von Zustandsinformationen und/oder eine Programminstruktion-Dekodiereinheit zum Dekodieren von Programminstruktionen aufweist.

4. Netzwerkprozessor gemäß einem der Ansprüche 1 bis 3, wobei die Ausgangskommunikationsschnittstelle und/oder die Eingangskommunikationsschnittstelle eine Switch-Fabric-Schnittstelle zu einer Switch-Fabric ist.

5. Netzwerkprozessor gemäß einem der Ansprüche 1 bis 4, wobei die Ausgangskommunikationsschnittstelle und/oder die Eingangskommunikationsschnittstelle gemäß RapidIO, Hypertransport, PCI-Express, CSIX, Ethernet, IEEE 802.3, Token-ring oder ATM bereitgestellt wird.

6. Netzwerkprozessor gemäß einem der Ansprüche 1 bis 5, wobei der Netzwerkprozessor ferner mindestens ein Hard-Makro aufweist und ein Prozess, dessen Realisierung zur Bereitstellung der Ausgangskommunikationsschnittstelle und/oder der Eingangskommunikationsschnittstelle erforderlich ist, mittels auf mindestens einem der Schnittstellenprozessorelemente ausgeführten Programminstruktionen oder mittels des mindestens einen Hard-Makros realisiert ist.

## Claims

1. A network processor (600) having a plurality of programmable processor elements (607, 609, 610), in which
- each processor element from the plurality of processor elements (607, 609, 610) is set up to provide communication network protocol basic functions;
- a first portion of the plurality of processor elements (607) is set up as communication network processor elements; and
- a second portion of the plurality of processor elements (609, 610) is set up as interface processor elements, which interface processor elements are set up to provide an output communication interface and/or an input communication interface (602) for the network processor on the basis of a communication protocol for outputting and/or inputting of data packets,
- wherein the processor elements of the second portion of the plurality of processor elements differ from the processor elements of the first portion of the plurality of processor elements only in terms of their programming.

2. The network processor as claimed in claim 1, wherein each processor element from the plurality of processor elements has a bit operation unit for executing operations at bit level, a timer for providing a clocked counter, and a checksum processing unit for processing checksums.

3. The network processor as claimed in claim 1 or 2, wherein each processor element from the plurality of processor elements has a memory for storing data, programming instructions, and state information and/or has a program instruction decoding unit for decoding program instructions.

4. The network processor as claimed in one of claims 1 to 3, wherein the output communication interface and/or the input communication interface is a switch fabric interface for a switch fabric.

5. The network processor as claimed in one of claims 1 to 4, wherein the output communication interface and/or the input communication interface is provided on the basis of RapidIO, Hypertransport, PCI Express, CSIX, Ethernet, IEEE 802.3, Token-Ring, or ATM.

6. The network processor as claimed in one of claims 1 to 5, wherein the network processor also has at least one hard macro and a process, which needs to be implemented in order to provide the output communication interface and/or the input communication interface, is implemented using program instructions executed on at least one of the interface processor elements or using the at least one hard macro.

## Revendications

1. Processeur (600) de réseau comprenant une pluralité d'éléments (607, 609, 610) de processeur programmables, dans lequel
- chaque élément de processeur de la pluralité d'éléments (607, 609, 610) de processeur est conçu pour mettre à disposition des fonctions de base de protocole de réseau de communication ;
- une première partie de la pluralité d'éléments (607) de processeur est conçue comme éléments de processeur de réseau de communication ; et
- une deuxième partie de la pluralité d'éléments (609, 610) de processeur est conçue comme éléments de processeur d'interface, les éléments de processeur d'interface étant conçus pour, suivant un protocole de communication, mettre à disposition pour le processeur de réseau une interface de communication de sortie et/ou une interface (602) de communication d'entrée pour la sortie et/ou l'entrée de paquets de données,
- dans lequel les éléments de processeur de la deuxième partie de la pluralité d'éléments de processeur se distinguent des éléments de processeur de la première partie de la pluralité d'éléments de processeur seulement par leur programmation.

2. Processeur de réseau suivant la revendication 1, dans lequel chaque élément de processeur de la pluralité d'éléments de processeur comporte une unité d'opération de bit pour exécuter des opérations au plan binaire, un synchroniseur pour mettre à disposition un compteur cadencé et une unité de traitement de somme de contrôle pour le traitement de sommes de contrôle.

3. Processeur de réseau suivant la revendication 1 ou 2, dans lequel chaque élément de processeur de la pluralité d'éléments de processeur comporte une mémoire pour la mémorisation de données, d'instructions de programme et d'informations d'état et/ou une unité de décodage d'instructions de programme pour le décodage d'instructions de programme.

4. Processeur de réseau suivant l'une des revendications 1 à 3, dans lequel l'interface de communication de sortie et/ou l'interface de communication d'entrée est une interface switch-fabric avec un switch-fabric.

5. Processeur de réseau suivant l'une des revendications 1 à 4, dans lequel l'interface de communication de sortie et/ou l'interface de communication d'entrée est mise à disposition suivant rapidIO, hypertransport, PCI-express, CSIX, éthernet, IEEE 802.3, token-ring ou ATM.

6. Processeur de réseau suivant l'une des revendications 1 à 5, dans lequel le processeur de réseau comprend, en outre, au moins une macro dure et un processus, dont la réalisation est nécessaire à la mise à disposition de l'interface de communication de sortie et/ou de l'interface de communication d'entrée, au moyen duquel sont réalisées des instructions de programme exécutées sur au moins l'un des éléments de processeur d'interface ou au moyen duquel est réalisée au moins une macro dure.
